# EUROPEAN PATENT APPLICATION

(11) **EP 4 729 196 A1**
(43) Date of publication of application: **22.04.2026**
(21) Application number: 23948248.2
(22) Date of filing: 31.10.2023
(51) Int. Cl.: B21B 1/26, B21B 1/38

(54) **MANUFACTURING METHOD FOR NON-ORIENTED SILICON STEEL SHEET**

(30) Priority: 07.08.2023 CN 202310985190
(71) Applicant: Institute of Research of Iron and Steel, Jiangsu Province/Sha-Steel, Co. Ltd (CN), Suzhou, Jiangsu 215625 (CN); Jiangsu Shagang Group Co., Ltd., Suzhou, Jiangsu 215625 (CN); Zhangjiagang Yangtze River Cold Rolled Plate Co. Ltd, Suzhou, Jiangsu 215625 (CN)
(72) Inventor: WU, Shengjie, Suzhou, Jiangsu 215625 (CN); MA, Han, Suzhou, Jiangsu 215625 (CN); YUE, Chongxiang, Suzhou, Jiangsu 215625 (CN); QIAN, Hongwei, Suzhou, Jiangsu 215625 (CN)
(74) Representative: Gille Hrabal Partnerschaftsgesellschaft mbB Patentanwälte
(86) International application number: PCT/CN2023/128492
(87) International publication number: WO 2025/030682

(57) **Abstract**

The present application discloses a producing method of a non-oriented silicon steel thin sheet. The method comprises processes of a slab continuous casting, a slab heating, a transfer bar preparation, a surface treatment, a billet assembly, a heating, a hot rolling, no normalizing, a pickling, a cold rolling, an annealing and a coating, and also comprises a coil separation process located before or after the cold rolling process; wherein, in the surface treatment process, a transfer bar enters a tunnel furnace for a high-temperature reduction heat treatment in a reducing atmosphere, a holding temperature is 950~1000°C, and a holding time is 15~30min; a single-layer non-oriented silicon steel product with a thickness of 0.15~0.30mm is produced. The present application obtains a thin-specification high-grade non-oriented silicon steel, and has a low production cost and a low production difficulty.

## Description

### TECHNICAL FIELD

The present application belongs to a technical field of steel material preparation, and relates to a producing method of a non-oriented silicon steel thin sheet.

### BACKGROUND

With a rapid development of new energy vehicles, drive motors thereof are developing toward a high speed, a high power density and a high efficiency. As a motor speed increases, a core loss of a motor rises sharply. Drive motor cores mainly use non-oriented silicon steel, and non-oriented silicon steel requires good magnetic properties, including a lower core loss and a higher magnetic induction. A core loss is mainly divided into three parts: a hysteresis loss, an eddy current loss and an anomalous loss, wherein the eddy current loss which accounts for a major part is proportional to a square of a product thickness of non-oriented silicon steel.

Therefore, how to produce thinner non-oriented silicon steel products to improve magnetic properties under a same chemical composition is an important research direction in a field of non-oriented silicon steel.

A producing method of non-oriented silicon steel usually includes hot rolling and cold rolling. Since the thinner a thickness of a hot-rolled coil formed by hot rolling is, the more difficult a rolling temperature and a strip shape are to guarantee and the greater a rolling load is, the thickness of the hot-rolled coil is usually above 2.0 mm. When a cold rolling reduction is too large, on one hand, a {111} texture orientation unfavorable to magnetic properties is enhanced in a final non-oriented silicon steel product obtained after annealing, resulting in a reduced magnetic induction, and on the other hand, a cold rolling deformation storage is large, and grains are difficult to grow effectively during an annealing process, resulting in an increased core loss. Furthermore, in a case where the hot-rolled coil is difficult to thin and the cold rolling reduction cannot be too large, non-oriented silicon steel is difficult to effectively reduce a thickness of a product when a conventional preparation is adopted. Correspondingly, a degree of improving magnetic properties by thinning non-oriented silicon steel products is limited.

There are also existing technologies that attempted to produce thin-specification non-oriented silicon steel. For example, a patent application CN112538592A provides a multiple annealing multiple cold rolling method, and although the method can obtain thin-specification products, both annealing and cold rolling are multiple times, resulting in a long process flow and a high production cost. For another example, a patent application CN107245644A provides a thin strip continuous casting method, and in the method, because a solidification time of a twin-roll thin strip continuous casting billet is short, and a silicon content of non-oriented silicon steel is high, a thermal conductivity decreases, which results in an unstable casting and a difficult production.

In summary, there is no feasible solution with a low cost and a low production difficulty in the field for which method to use to obtain thinner non-oriented silicon steel products to improve magnetic properties.

### SUMMARY

An object of the present application is to provide a producing method of a non-oriented silicon steel thin sheet, which can reduce a thickness of non-oriented silicon steel and improve magnetic properties, and has a low production cost and a low production difficulty.

To achieve the above object of the invention, an embodiment provides a producing method of a non-oriented silicon steel thin sheet. The producing method comprises the following processes,
a continuous casting process: producing a continuous casting billet by a slab continuous casting machine, a thickness of the continuous casting billet being t₁=200~250mm, a chemical composition thereof in mass percentage being: C≤0.0025%, S≤0.0015%, Si:2.50~3.40%, Al:0.30~1.00%, Mn:0.20~0.80%, P:0.02~0.04%, Nb≤0.004%, V≤0.004%, Ti≤0.004%, Ni≤0.03%, Cr≤0.03%, Cu≤0.03%, N≤0.002%, and a rest being Fe and unavoidable inclusions;
a slab heating process: after the continuous casting billet leaves the slab continuous casting machine, heating the continuous casting billet in a heating furnace, a soaking temperature being T₁=T₁₀±10°C, a time in furnace being 180~200min, T₁₀=1100-30×[Si]-20×[Al], wherein [Si] and [Al] are 100 times of mass percentages of Si and Al in the continuous casting billet;
a transfer bar preparation process: after the continuous casting billet leaves the heating furnace, forming a transfer bar by a multi-pass rough rolling, a thickness of the transfer bar being t₂=t₁/N, wherein, N=2~6;
a surface treatment process: the transfer bar enters a tunnel furnace for a high-temperature reduction heat treatment in a reducing atmosphere of 90%H₂+10%H₂S, a holding temperature being 950~1000°C, a holding time being 15~30min;
a billet assembly process: arranging N transfer bars into a laminated billet, welding four side edges of the laminated billet, so that the laminated billet forms an integral composite billet;
a heating process: heating the composite billet in the heating furnace, a heating temperature being 1090~1130°C, a heating time being 180~200min;
a hot rolling finish rolling process: after the composite billet exits the heating furnace, performing a hot rolling, to form a composite hot-rolled coil with a thickness of 2.20~2.80mm; wherein, a finish rolling temperature of the hot rolling is 820~860°C, a coiling temperature is 600~640°C;
thereafter, the obtained composite hot-rolled coil is produced into a single-layer non-oriented silicon steel product with a thickness of 0.15~0.30mm through a sequential pickling process, a cold rolling process, an annealing process and a coating process, and through a coil separation process located before or after the cold rolling process, without a normalizing.

As a further improvement of the embodiment, a reduction ratio of each pass of the rough rolling is 20~22%, and an exit temperature T₂ of a final pass of the rough rolling is 900±25°C.

As a further improvement of the embodiment, the composite billet is a cubic billet with a parallel upper surface and a lower surface and planar side edges;
welding the four side edges of the laminated billet by an arc welding.

As a further improvement of the embodiment, in the billet assembly process, applying a high-temperature resistant insulating coating to an upper surface and a lower surface of the transfer bar by an electrostatic spraying, and then arranging the N transfer bars into the laminated billet, wherein the high-temperature resistant insulating coating adopts an MgO high-temperature resistant coating.

As a further improvement of the embodiment, the coil separation process is located before the pickling process, the composite hot-rolled coil is separated into N single-layer hot-rolled coils by a coil separator, and thereafter each single-layer hot-rolled coil is produced into the single-layer non-oriented silicon steel product through the sequential pickling process, the cold rolling process, the annealing process and the coating process.

As a further improvement of the embodiment, in the cold rolling process, each single-layer hot-rolled coil is cold-rolled on a single-stand cold rolling mill to form a single-layer cold-rolled hard coil, a cold rolling reduction ratio is 74~87%, and a sheet thickness of the single-layer cold-rolled hard coil is 0.15~0.30mm.

As a further improvement of the embodiment, the coil separation process is located between the cold rolling process and the annealing process, the composite hot-rolled coil is first made into a composite cold-rolled hard coil through the sequential pickling process and the cold rolling process, thereafter the composite cold-rolled hard coil is separated into N single-layer cold-rolled hard coils by the coil separator, and each single-layer cold-rolled hard coil is produced into the single-layer non-oriented silicon steel product through the sequential annealing process and the coating process.

As a further improvement of the embodiment, in the cold rolling process, the composite hot-rolled coil is cold-rolled on the single-stand cold rolling mill to form the composite cold-rolled hard coil, the cold rolling reduction ratio is 73~86%, a thickness of the composite cold-rolled hard coil is 0.30~0.60mm, and the sheet thickness of the single-layer cold-rolled hard coil is 0.15~0.30mm.

As a further improvement of the embodiment, in the annealing process: a single-layer cold-rolled hard coil is annealed in a continuous annealing furnace to obtain an annealed steel strip;
during the annealing process, a heating rate is 30~50°C/s, a soaking temperature is 980~1020°C, a cooling rate is 10~15°C/s, a protective atmosphere adopts 20%H₂+80%N₂, a dew point is 10~20°C, and a unit tension is 2~3N/mm².

As a further improvement of the embodiment, in the coating process: coating an insulating coating with a thickness of 0.5~0.8µm on each surface of the annealed steel strip.

Compared with an existing technology, beneficial effects of the present application are:
1) Compared with an existing conventional technology of directly hot-rolling one transfer bar into a hot-rolled coil, the present application combines N transfer bars into an integral composite billet, performs a hot rolling on the composite billet in a hot rolling finish rolling process to obtain a composite hot-rolled coil, the composite hot-rolled coil has N single-layer hot-rolled coils, and when a thickness of the composite hot-rolled coil is consistent with a thickness of a hot-rolled coil of the existing conventional technology (for example, both have a thickness of 2.20mm), not only can a hot rolling temperature and a strip shape be guaranteed, and a low load and a low rolling difficulty be guaranteed (that is, it is unnecessary to perform an excessive hot rolling in pursuit of an ultra-thinness, which causes a rolling difficulty to increase significantly, a strip shape to deteriorate, or even a microstructure to deteriorate), but also a thickness of a single-layer hot-rolled coil formed by rolling each transfer bar is far smaller than the thickness of the hot-rolled coil of the existing conventional technology, and furthermore, in a case where a cold rolling reduction in a subsequent cold rolling process is lower than that in the existing conventional technology, a single-layer cold-rolled hard coil thinner than that in the existing conventional technology is obtained;
2) Based on the foregoing point 1, not only can magnetic properties of non-oriented silicon steel be improved based on a thinner thickness (for example, a thinner thickness corresponds to a lower core loss); but also a cold rolling reduction is lower, so that a {111} texture unfavorable to magnetic properties can be guaranteed to weaken, while a {100} texture and a {110} texture favorable to magnetization are enhanced, avoiding a reduction of a magnetic induction caused by a cold rolling, that is, the magnetic induction can be improved compared with the existing conventional technology; furthermore, the cold rolling reduction is lower, so that a cold rolling deformation storage becomes smaller, grains easily grow during an annealing process, so that the core loss can be reduced compared with the existing conventional technology;
3) In addition, in the present application, by precisely controlling a temperature and a time in a slab heating process, and temperatures in a heating process and the hot rolling finish rolling process, a microstructure, a surface quality and a strip shape of a non-oriented silicon steel product can be further improved, and a performance of the non-oriented silicon steel product, especially magnetic properties, can be improved;
4) Furthermore, a transfer bar maintains a high temperature (for example, a holding temperature of 950~1000°C) in a surface treatment process without requiring the transfer bar to be reduced to a normal temperature, on one hand, a generation of a surface crack is avoided, and a surface quality of a non-oriented silicon steel product is further improved, and on another hand, a microstructure of the transfer bar can be improved at the high temperature, which is beneficial to further improving magnetic properties of a final non-oriented silicon steel, and even an excellent magnetic property can be obtained by omitting a normalizing process, so that an overall process flow is simple, compared with the existing conventional technology, there is no additional high-cost and high-difficulty additional process, and even a hot rolling difficulty and a cold rolling difficulty can be greatly reduced compared with the existing conventional technology, and overall, the present application has advantages of a low production cost, a low production difficulty and a stronger quality stability, is beneficial to an industrial implementation, and has a huge economic benefit.

### DETAILED DESCRIPTION

A technical solution of the present application will be further described below in combination with specific embodiments.

The present application provides a producing method of a non-oriented silicon steel thin sheet. The producing method comprises processes of a slab continuous casting process, a slab heating process, a transfer bar preparation process, a surface treatment process, a billet assembly process, a heating process, a hot rolling process, a normalizing process or no normalizing process, a pickling process, a cold rolling process, an annealing process and a coating process, and also comprises a coil separation process located before or after the cold rolling process, thereby producing a non-oriented silicon steel product.

Next, various embodiments based on a basic inventive concept of the present application will be described in detail.

### <First Embodiment>

This embodiment provides a producing method of a non-oriented silicon steel thin sheet.

In the present embodiment, the producing method comprises sequentially performed processes of a slab continuous casting process, a slab heating process, a transfer bar preparation process, a surface treatment process, a billet assembly process, a heating process, a hot rolling process, a normalizing process, a pickling process, a cold rolling process, a coil separation process, an annealing process and a coating process, thereby producing a non-oriented silicon steel product. These processes will be introduced one by one below.

### [Slab Continuous Casting Process]

A molten steel is cast into a continuous casting billet through a slab continuous casting machine. A thickness of the continuous casting billet is 200~250mm, preferably 220mm. Thus, compared with a thin strip continuous casting method mentioned in the background art, a continuous casting process of the present application has a small production difficulty and a stable casting, and can easily guarantee a quality of the continuous casting billet.

A chemical composition of the continuous casting billet satisfies a chemical composition of non-oriented silicon steel, and can be specifically implemented with a chemical composition of an existing known non-oriented silicon steel.

In a preferred embodiment, the chemical composition of the continuous casting billet in mass percentage is: C≤0.0025%, S≤0.0015%, Si:2.50~3.40%, Al:0.30~1.00%, Mn:0.20~0.80%, P:0.02~0.04%, Nb≤0.004%, V≤0.004%, Ti≤0.004%, Ni≤0.03%, Cr≤0.03%, Cu≤0.03%, N≤0.002%, and a rest being Fe and unavoidable inclusions. Based on the chemical composition, a high-grade non-oriented silicon steel can be produced, on one hand, compared with the chemical composition of the existing known non-oriented silicon steel, the chemical composition can greatly improve magnetic properties of a final non-oriented silicon steel product, and on another hand, the higher a Si content in the thin strip continuous casting method mentioned in the background art is, the worse a casting stability is, while the present application under the basic inventive concept can adopt the continuous casting process, which can guarantee an obtaining of the high-grade non-oriented silicon steel product.

### [Slab Heating Process]

After the continuous casting billet leaves the slab continuous casting machine, the continuous casting billet is heated in a heating furnace, a soaking temperature is T₁=T₁₀±10°C, and a time in furnace is 180~200min. Wherein, T₁₀=1100-30×[Si]-20×[Al], and [Si] and [Al] in a formula are 100 times of mass percentages of Si and Al in the continuous casting billet, for example, if a Si mass percentage in the continuous casting billet is 2.5%, [Si] in the formula takes a value of 2.5. Thus, by adopting the soaking temperature, a surface quality of the continuous casting billet and an excellent microstructure obtained in a subsequent transfer bar preparation can be guaranteed, and a performance of the final non-oriented silicon steel product can be improved.

Preferably, after the continuous casting billet leaves the slab continuous casting machine, the continuous casting billet directly enters the heating furnace for a heating. That is, the continuous casting billet is heated via hot charging.

### [Transfer Bar Preparation Process]

After the continuous casting billet leaves the heating furnace, a transfer bar is formed by a multi-pass rough rolling. A thickness of the transfer bar is t₂=t₁/N.

In a further preferred case, a reduction ratio of each pass of the rough rolling is 20~22%, and an exit temperature T₂ of a final pass of the rough rolling is 900±25°C. Such a temperature control and a reduction ratio control, combined with a control of the soaking temperature, can further improve a transfer bar preparation effect, and guarantee a surface quality and a microstructure of the transfer bar.

Furthermore, in the transfer bar preparation process, preferably 3 passes of the rough rolling are adopted to form the transfer bar.

### [Surface Treatment Process]

After cooling the transfer bar to a room temperature, an oxide scale on a surface of the transfer bar is mechanically ground and cleaned, and after a cleaning, a surface roughness Ra of the surface of the transfer bar is 0.8~1.2µm.

### [Billet Assembly Process]

N transfer bars are arranged into a laminated billet, and four side edges of the laminated billet are welded, so that the laminated billet forms an integral composite billet.

Wherein, N is an integer from 2 to 6, that is, the laminated billet is formed by laminating 2 to 6 transfer bars. It can be understood that the N transfer bars in the process are all produced through a foregoing continuous casting process, a slab heating process, a transfer bar preparation process, and a surface treatment process. In addition, chemical compositions of the N transfer bars may be same or different.

Preferably, the four side edges of the laminated billet are welded by an arc welding, and of course, the present application is not limited to this, and other welding technologies known in the field may also be adopted.

In addition, the composite billet is a cubic billet with a parallel upper surface and a lower surface and planar side edges. Specifically, it may be: in one implementation case, the N transfer bars have a consistent length and a consistent width, are stacked together and aligned, and then a joint is welded, and an obtained composite billet naturally presents the cubic billet; in another implementation case, the N transfer bars have an inconsistent length and/or an inconsistent width, and after being stacked together, different side edges are filled and welded with a sealing strip or a solder, so that the obtained composite billet presents the cubic billet. Of course, these are only some implementation examples, and the present application is not limited to this.

Preferably, a high-temperature resistant insulating coating is first applied to an upper surface and a lower surface of the transfer bar by an electrostatic spraying, and then the N transfer bars are arranged into the laminated billet. Of course, at least, in the laminated billet, an upper and a lower adjacent two transfer bars are separated by the high-temperature resistant insulating coating. Specifically, the high-temperature resistant insulating coating may be applied in advance to at least one of respective surfaces to be contacted of the upper and the lower adjacent two transfer bars, and then the two transfer bars are laminated.

Here, the surface to be contacted refers to a surface of the transfer bar that faces another transfer bar and is fitted with the another transfer bar in the laminated billet. For example, a transfer bar A is laminated and adjacent to another transfer bar B, and a lower surface P1 of the transfer bar A contacts/fits with an upper surface P2 of the transfer bar B, then the lower surface P1 constitutes the surface to be contacted of the transfer bar A, and the upper surface P2 also constitutes the surface to be contacted of the transfer bar B.

When applying the high-temperature resistant insulating coating, it may be that only the lower surface P1 of the transfer bar A is coated with the high-temperature resistant insulating coating, or it may be that only the upper surface P2 of the transfer bar B is coated with the high-temperature resistant insulating coating, or it may be that both the lower surface P1 of the transfer bar A and the upper surface P2 of the transfer bar B are coated with the high-temperature resistant insulating coating, and by these three ways, the upper and the lower adjacent two transfer bars A, B can be separated by the high-temperature resistant insulating coating in the laminated billet.

Preferably, the applied high-temperature resistant insulating coating adopts an MgO high-temperature resistant coating.

### [Heating Process]

The composite billet is heated in the heating furnace, a heating temperature is 1090~1130°C, and a heating time is 180~200min.

### [Hot Rolling Finish Rolling Process]

After the composite billet exits the heating furnace, the composite billet is hot-rolled to form a composite hot-rolled sheet with a thickness of 2.20~2.80mm, and thereafter the composite hot-rolled sheet is coiled into a composite hot-rolled coil. Thus, the present application hot-rolls the composite billet, and a produced composite hot-rolled sheet only needs to satisfy a thickness of 2.20~2.80mm to guarantee obtaining a non-oriented silicon steel product with a thickness similar to or even thinner than an existing conventional technology under a condition of a small cold rolling reduction. Thereby, not only can magnetic properties of non-oriented silicon steel be improved based on a thinner thickness (for example, a thinner thickness corresponds to a lower core loss), but also based on a lower cold rolling reduction, a magnetic induction can be improved and a core loss can be reduced, and a large hot rolling difficulty, a hot rolling temperature and a strip shape, a low load and a low rolling difficulty can be avoided (that is, it is unnecessary to perform an excessive hot rolling in pursuit of an ultra-thinness, which causes a rolling difficulty to increase significantly, a strip shape to deteriorate, or even a microstructure to deteriorate).

In addition, when a hot rolling is performed in a form of the composite billet, the respective surfaces to be contacted of the upper and the lower adjacent two transfer bars are not exposed to an external environment, so a surface oxide scale is not easily generated, a surface quality of a final non-oriented silicon steel product can be improved, and a steel loss rate can be reduced.

Wherein, a finish rolling temperature of the hot rolling is 820~860°C, and a coiling temperature is 600~640°C. Thus, a microstructure, a surface quality and a strip shape of the non-oriented silicon steel product can be further improved, and a performance of the non-oriented silicon steel product, especially magnetic properties, can be improved.

### [Normalizing Process]

The composite hot-rolled coil is normalized in a continuous normalizing furnace, a normalizing temperature is T₃=T₃₀+10°C, and T₃₀=980-20×[Si]-10×[Al].

Wherein, as described above, [Si] and [Al] are 100 times of mass percentages of Si and Al in the continuous casting billet.

In the embodiment, a control of the normalizing temperature can further improve the microstructure, the surface quality and the strip shape of the non-oriented silicon steel product, and improve the performance of the non-oriented silicon steel product, especially the magnetic properties.

### [Pickling Process]

After the composite hot-rolled coil leaves the continuous normalizing furnace, the composite hot-rolled coil undergoes a shot blasting and a pickling to remove the surface oxide scale. Thus, the present embodiment performs the pickling in a state of the composite hot-rolled coil (that is, a coil separation has not been performed when pickling), so that a surface to be pickled is small, and a possibility of an environmental pollution caused by the pickling is reduced.

### [Cold Rolling Process]

The composite hot-rolled coil after the pickling is cold-rolled on a single-stand cold rolling mill to form a composite cold-rolled hard coil.

Wherein, the single-stand cold rolling mill preferably adopts a twenty-roll single-stand cold rolling mill.

Thus, combined with the foregoing, it can be known that the present application only needs one cold rolling, and with a low cold rolling reduction, a non-oriented silicon steel product with a thickness equivalent to or even thinner than an existing conventional technology can be obtained; from another perspective, even with a smaller cold rolling reduction than the existing conventional technology, a non-oriented silicon steel product thinner than the existing conventional technology can be obtained.

For example, in one embodiment, a cold rolling reduction ratio is 73~86%, and a thickness of the composite cold-rolled hard coil is 0.30~0.60mm.

### [Coil Separation Process]

The composite cold-rolled hard coil obtained in the cold rolling process is separated into N single-layer cold-rolled hard coils by a coil separator. Wherein, the N single-layer cold-rolled hard coils correspond to the foregoing N transfer bars respectively, that is, each transfer bar is converted into a corresponding single-layer cold-rolled hard coil.

In one embodiment, the N transfer bars have a same thickness, and correspondingly, the N single-layer cold-rolled hard coils have a same sheet thickness, and a sheet thickness of each single-layer cold-rolled hard coil is one Nth of a thickness of the composite cold-rolled hard coil. For example, when N takes a value of 2, the coil separation process obtains two single-layer cold-rolled hard coils and a sheet thickness of each single-layer cold-rolled hard coil is half a thickness of the composite cold-rolled hard coil (for example, the thickness of the composite cold-rolled hard coil is 0.30~0.60mm as described above, and correspondingly, a sheet thickness of the single-layer cold-rolled hard coil is 0.15~0.30mm).

### [Annealing Process]

A single-layer cold-rolled hard coil is annealed in a continuous annealing furnace to obtain an annealed steel strip.

During the annealing process, a heating rate is 30~50°C/s, a soaking temperature is 980~1020°C, a cooling rate is 10~15°C/s, a protective atmosphere adopts 20%H₂+80%N₂, a dew point is 10~20°C, and a unit tension is 2~3N/mm².

### [Coating Process]

An insulating coating with a thickness of 0.5~0.8µm is coated on each surface of the annealed steel strip, and thus, the non-oriented silicon steel product is obtained.

It can be understood that an actual thickness of the obtained non-oriented silicon steel product is a sum of a sheet thickness of a corresponding single-layer cold-rolled hard coil and thicknesses of an upper surface insulating coating and a lower surface insulating coating of a corresponding annealed steel strip. For example, for a single-layer cold-rolled hard coil with a thickness of 0.15mm, when thicknesses of an upper surface insulating coating and a lower surface insulating coating of an annealed steel strip corresponding to the single-layer cold-rolled hard coil are both 0.5µm, then a corresponding actual thickness of the non-oriented silicon steel product is 0.15mm+0.5µm+0.5µm=0.1510mm. However, since a thickness of a coating is very small relative to a sheet thickness of the single-layer cold-rolled hard coil, a thickness of the non-oriented silicon steel product is basically consistent with the sheet thickness of the single-layer cold-rolled hard coil. Therefore, in the present application, the thickness of the non-oriented silicon steel product takes a value of the sheet thickness of the single-layer cold-rolled hard coil.

The producing method of the present embodiment has been described in detail above. Next, the present embodiment also provides a non-oriented silicon steel thin sheet, which is produced by the producing method. Even when a same chemical composition and a same thickness as an existing conventional technology are adopted, magnetic properties thereof are greatly improved compared with the existing conventional technology, and a production difficulty is low and a production cost is low.

The non-oriented silicon steel thin sheet has a thickness of 0.15~0.30mm, a core loss P_{1.5/50}≤2.40W/kg, P_{1.0/400}≤16.0W/kg, and a magnetic induction B₅₀₀₀≥1.65T.

In terms of a chemical composition, a chemical composition of the non-oriented silicon steel thin sheet in mass percentage is: C≤0.0025%, S≤0.0015%, Si:2.50~3.40%, Al:0.30~1.00%, Mn:0.20~0.80%, P:0.02~0.04%, Nb≤0.004%, V≤0.004%, Ti≤0.004%, Ni≤0.03%, Cr≤0.03%, Cu≤0.03%, N≤0.002%, and a rest being Fe and unavoidable inclusions. Based on the chemical composition, the non-oriented silicon steel thin sheet is a high-grade non-oriented silicon steel with an excellent magnetic property.

It can be understood that a chemical composition of the non-oriented silicon steel thin sheet is the same as a chemical composition of a continuous casting billet from which the non-oriented silicon steel thin sheet is produced by the producing method.

Three specific examples based on the present embodiment are provided below. Specifically, implementation processes of these examples are as follows:
(1) a molten steel was cast into a continuous casting billet with a thickness of 220mm through a slab continuous casting machine;
(2) after the continuous casting billet left the slab continuous casting machine, the continuous casting billet was heated in a heating furnace, and a soaking temperature and a time in furnace are shown in Table 1;
(3) after the continuous casting billet left the heating furnace, a transfer bar with a thickness of 110mm was formed by a multi-pass rough rolling, a reduction ratio of each pass of the rough rolling was 20~22%, and an exit temperature of a final pass of the rough rolling is shown in Table 1;
(4) after cooling the transfer bar to a room temperature, an oxide scale on a surface of the transfer bar was mechanically ground and cleaned, and after a cleaning, a surface roughness Ra of the surface of the transfer bar was 0.8~1.2µm; thereafter, the surface of the transfer bar was coated with an MgO high-temperature resistant insulating coating, then two transfer bars were arranged into a laminated billet, and then four side edges of the laminated billet were welded so that the laminated billet formed an integral composite billet;
(5) the composite billet was heated in a heating furnace, and a heating temperature and a heating time are shown in Table 1;

**[Table 1]**

| Example | Soaking Temperature, °C | Time in Furnace, min | Exit Temperature, °C | Heating Temperature, °C | Heating Time, min |
|---|---|---|---|---|---|
| 1 | 1019 | 185 | 919 | 1110 | 190 |
| 2 | 992 | 190 | 892 | 1106 | 195 |
| 3 | 1005 | 190 | 905 | 1106 | 188 |

(6) after the composite billet exited the heating furnace, the composite billet was hot-rolled to form a composite hot-rolled sheet, and then the composite hot-rolled sheet was coiled into a composite hot-rolled coil, and a thickness H1, a finish rolling temperature and a coiling temperature of the composite hot-rolled sheet are shown in Table 2 respectively;
(7) the composite hot-rolled coil was normalized in a continuous normalizing furnace, and a normalizing temperature is shown in Table 2; after the composite hot-rolled coil left the continuous normalizing furnace, the composite hot-rolled coil underwent a shot blasting and a pickling to remove a surface oxide scale;
(8) the composite hot-rolled coil after the pickling was cold-rolled on a single-stand cold rolling mill to form a composite cold-rolled hard coil, and a thickness H2 of the composite cold-rolled hard coil is shown in Table 2;
(9) the composite cold-rolled hard coil obtained in the cold rolling process was separated into two single-layer cold-rolled hard coils by a coil separator;
(10) a single-layer cold-rolled hard coil was annealed in a continuous annealing furnace to obtain an annealed steel strip; during the annealing process, a heating rate and a soaking temperature are shown in Table 2, a cooling rate was 10°C/s, a protective atmosphere adopted 20%H₂+80%N₂, a dew point was 15°C, and a unit tension is shown in Table 2;

**[Table 2]**

| Example | H1, mm | Finish Rolling Temperature, °C | Coiling Temperature, °C | Normalizing Temperature, °C | H2, mm | Heating Rate, °C/s | Soaking Temperature, °C | Unit Tension, N/mm² |
|---|---|---|---|---|---|---|---|---|
| 1 | 2.80 | 845 | 620 | 927 | 0.60 | 30 | 980 | 2.9 |
| 2 | 2.60 | 840 | 620 | 909 | 0.50 | 32 | 985 | 2.5 |
| 3 | 2.40 | 838 | 622 | 930 | 0.30 | 35 | 990 | 2.2 |

(11) an insulating coating with a thickness of 0.8µm was coated on each surface of the annealed steel strip, and thus, a non-oriented silicon steel product was obtained;
a chemical composition of one non-oriented silicon steel product obtained in various examples is shown in Table 3, and except for elements shown in Table 3, other chemical compositions are Fe and unavoidable inclusions; furthermore, a thickness, a core loss and a magnetic induction of the non-oriented silicon steel product are shown in Table 4;

**[Table 3]**

| Exam ple | chemical composition by mass percentage, % | | | | | | | | | | | | |
|---|---|---|---|---|---|---|---|---|---|---|---|---|---|
| | C | S | Si | Al | M n | P | Nb | V | Ti | Ni | Cr | Cu | N |
| 1 | 0.00 16 | 0.00 08 | 2.5 0 | 0.3 0 | 0.2 2 | 0.0 14 | 0.00 12 | 0.00 13 | 0.00 08 | 0.0 06 | 0.00 5 | 0.0 05 | 0.00 11 |
| 2 | 0.00 13 | 0.00 10 | 3.4 0 | 0.3 0 | 0.2 5 | 0.0 13 | 0.00 09 | 0.00 12 | 0.00 07 | 0.0 06 | 0.00 4 | 0.0 15 | 0.00 17 |
| 3 | 0.00 16 | 0.00 07 | 2.5 0 | 1.0 | 0.4 0 | 0.0 16 | 0.00 09 | 0.00 11 | 0.00 07 | 0.0 14 | 0.00 12 | 0.0 14 | 0.00 13 |

**[Table 4]**

| Example | Thickness, mm | P_{1.5/50}, W/kg | P_{1.0/400}, W/kg, | B₅₀₀₀, T |
|---|---|---|---|---|
| 1 | 0.30 | 2.40 | 15.87 | 1.671 |
| 2 | 0.25 | 2.17 | 12.24 | 1.663 |
| 3 | 0.15 | 2.08 | 11.68 | 1.650 |

### <Second Embodiment>

This embodiment provides a producing method of a non-oriented silicon steel thin sheet.

In the present embodiment, the producing method comprises sequentially performed processes of a continuous casting process, a slab heating process, a transfer bar preparation process, a surface treatment process, a billet assembly process, a heating process, a hot rolling process, a pickling process, a cold rolling process, a coil separation process, an annealing process and a coating process, thereby producing a non-oriented silicon steel product.

A difference between the present embodiment and the first embodiment introduced above lies in: a surface treatment process and an omitting of a normalizing process. And a continuous casting process, a slab heating process, a transfer bar preparation process, a billet assembly process, a heating process, a hot rolling finish rolling process, a pickling process, a cold rolling process, a coil separation process, an annealing process and a coating process of the present embodiment are respectively the same as the first embodiment introduced above. Differences between the present embodiment and the first embodiment will be introduced below.

### [Surface Treatment Process]

In the present embodiment, a transfer bar obtained in a transfer bar preparation process enters a tunnel furnace for a high-temperature reduction heat treatment in a reducing atmosphere of 90%H₂+10%H₂S, a holding temperature is 950~1000°C, and a holding time is 15~30min. Thus, the surface treatment process of the present embodiment can not only achieve a treatment of a surface oxide scale, thereby benefiting a surface quality of a subsequently obtained non-oriented silicon steel product; but also, compared with a mechanical grinding method adopted in a surface treatment process in the first embodiment above, the transfer bar in the present embodiment maintains a high temperature (for example, a holding temperature of 950~1000°C) in the surface treatment process without requiring the transfer bar to be reduced to a normal temperature. On one hand, a generation of a surface crack is avoided, and a surface quality of the non-oriented silicon steel product is further improved. On another hand, a microstructure of the transfer bar can be improved at the high temperature, which is beneficial to further improving magnetic properties of a final non-oriented silicon steel, and even an excellent magnetic property can be obtained by omitting a normalizing process, thereby shortening a process flow and reducing a production cost. On another hand, treating the surface oxide scale with the reducing atmosphere of 90%H₂+10%H₂S can improve a yield, further reducing the production cost.

Here, it is supplementarily explained that the present embodiment omits the normalizing process, and correspondingly, in the pickling process, a composite hot-rolled coil obtained in the hot rolling finish rolling process is directly subjected to a shot blasting and a pickling to remove the surface oxide scale.

Furthermore, a non-oriented silicon steel thin sheet provided by the present embodiment is produced by the producing method. Even when a same chemical composition and a same thickness as an existing conventional technology are adopted, magnetic properties thereof are greatly improved compared with the existing conventional technology, and a production difficulty is low and a production cost is low.

The non-oriented silicon steel thin sheet has a thickness of 0.15~0.30mm, a core loss P_{1.5/50}≤2.35W/kg, P_{1.0/400}≤14.5W/kg, and a magnetic induction B₅₀₀₀≥1.66T.

In terms of a chemical composition, a chemical composition of the non-oriented silicon steel thin sheet in mass percentage is: C≤0.0025%, S≤0.0015%, Si:2.50~3.40%, Al:0.30~1.00%, Mn:0.20~0.80%, P:0.02~0.04%, Nb≤0.004%, V≤0.004%, Ti≤0.004%, Ni≤0.03%, Cr≤0.03%, Cu≤0.03%, N≤0.002%, and a rest being Fe and unavoidable inclusions. Based on the chemical composition, the non-oriented silicon steel thin sheet is a high-grade non-oriented silicon steel with an excellent magnetic property.

Three specific examples based on the present embodiment are provided below. Specifically, implementation processes of these examples are as follows:
(1) a molten steel was cast into a continuous casting billet with a thickness of 200mm through a slab continuous casting machine;
(2) after the continuous casting billet left the slab continuous casting machine, the continuous casting billet was heated in a heating furnace, and a soaking temperature and a time in furnace are shown in Table 5;
(3) after the continuous casting billet left the heating furnace, a transfer bar with a thickness of 100mm was formed by a multi-pass rough rolling, a reduction ratio of each pass of the rough rolling was 20~22%, and an exit temperature of a final pass of the rough rolling is shown in Table 5;
(4) the transfer bar entered a tunnel furnace for a high-temperature reduction heat treatment in a reducing atmosphere of 90%H₂+10%H₂S, and a holding temperature and a holding time are shown in Table 5; thereafter, a surface of the transfer bar was coated with an MgO high-temperature resistant insulating coating, then two transfer bars were arranged into a laminated billet, and then four side edges of the laminated billet were welded so that the laminated billet formed an integral composite billet;
(5) the composite billet was heated in a heating furnace, and a heating temperature and a heating time are shown in Table 5;

**[Table 5]**

| Example | Soaking Temperature, °C | Time in Furnace, min | Exit Temperature, °C | Holding Temperature, °C | Holding Time, min | Heating Temperature, °C | Heating Time, °Cmin |
|---|---|---|---|---|---|---|---|
| 4 | 1015 | 180 | 910 | 1000 | 18 | 1120 | 180 |
| 5 | 990 | 200 | 890 | 980 | 20 | 1110 | 190 |
| 6 | 1000 | 190 | 900 | 950 | 30 | 1100 | 200 |

(6) after the composite billet exited the heating furnace, the composite billet was hot-rolled to form a composite hot-rolled sheet, and then the composite hot-rolled sheet was coiled into a composite hot-rolled coil, and a thickness H1, a finish rolling temperature and a coiling temperature of the composite hot-rolled sheet are shown in Table 6 respectively;
(7) the composite hot-rolled coil was directly subjected to a shot blasting and a pickling without a normalizing to remove a surface oxide scale;
(8) the composite hot-rolled coil after the pickling was cold-rolled on a single-stand cold rolling mill to form a composite cold-rolled hard coil, and a thickness H2 of the composite cold-rolled hard coil is shown in Table 6;
(9) the composite cold-rolled hard coil obtained in the cold rolling process was separated into two single-layer cold-rolled hard coils by a coil separator;
(10) a single-layer cold-rolled hard coil was annealed in a continuous annealing furnace to obtain an annealed steel strip; during the annealing process, a heating rate and a soaking temperature are shown in Table 6, a cooling rate was 10°C/s, a protective atmosphere adopted 20%H₂+80%N₂, a dew point was 15°C, and a unit tension is shown in Table 6;

**[Table 6]**

| Example | H1, mm | Finish Rolling Temperature, °C | Coiling Temperature, °C | H2, mm | Heating Rate, °C/s | Soaking Temperature, °C | Unit Tension, N/mm² |
|---|---|---|---|---|---|---|---|
| 4 | 2.80 | 850 | 640 | 0.60 | 30 | 980 | 2.9 |
| 5 | 2.60 | 840 | 620 | 0.50 | 32 | 985 | 2.5 |
| 6 | 2.40 | 830 | 600 | 0.30 | 35 | 990 | 2.2 |

(11) an insulating coating with a thickness of 0.8µm was coated on each surface of the annealed steel strip, and thus, a non-oriented silicon steel product was obtained;
a chemical composition of one non-oriented silicon steel product obtained in various examples is shown in Table 7, and except for elements shown in Table 7, other chemical compositions are Fe and unavoidable inclusions; furthermore, a thickness, a core loss and a magnetic induction of the non-oriented silicon steel product are shown in Table 8;

**[Table 7]**

| Exam ple | chemical composition by mass percentage, % | | | | | | | | | | | | |
|---|---|---|---|---|---|---|---|---|---|---|---|---|---|
| | C | S | Si | Al | M n | P | Nb | V | Ti | Ni | Cr | Cu | N |
| 4 | 0.00 18 | 0.00 13 | 2.5 5 | 0.3 5 | 0.4 2 | 0.0 15 | 0.00 11 | 0.00 08 | 0.00 08 | 0.0 06 | 0.0 05 | 0.0 05 | 0.00 11 |
| 5 | 0.00 15 | 0.00 08 | 3.4 0 | 0.3 0 | 0.2 5 | 0.0 13 | 0.00 09 | 0.00 12 | 0.00 11 | 0.0 04 | 0.0 07 | 0.0 09 | 0.00 15 |
| 6 | 0.00 13 | 0.00 05 | 2.6 0 | 1.0 0 | 0.4 0 | 0.0 15 | 0.00 10 | 0.00 13 | 0.00 12 | 0.0 08 | 0.0 03 | 0.0 04 | 0.00 13 |

**[Table 8]**

| Example | Thickness, mm | P_{1.5/50}, W/kg | P_{1.0/400}, W/kg, | B₅₀₀₀, T |
|---|---|---|---|---|
| 4 | 0.30 | 2.31 | 13.82 | 1.683 |
| 5 | 0.25 | 2.09 | 11.64 | 1.668 |
| 6 | 0.15 | 1.93 | 10.16 | 1.663 |

### <Third Embodiment>

This embodiment provides a producing method of a non-oriented silicon steel thin sheet.

In the present embodiment, the producing method comprises sequentially performed processes of a continuous casting process, a slab heating process, a transfer bar preparation process, a surface treatment process, a billet assembly process, a heating process, a hot rolling process, a coil separation process, a normalizing process, a pickling process, a cold rolling process, an annealing process and a coating process, thereby producing a non-oriented silicon steel product. These processes will be introduced one by one below.

First, a [slab continuous casting process], a [slab heating process], a [transfer bar preparation process], a [surface treatment process], a [billet assembly process], a [heating process] and a [hot rolling finish rolling process] of the present embodiment are the same as the first embodiment above, and will not be described again. Next, other processes of the present embodiment will be introduced.

### [Coil Separation Process]

A composite hot-rolled coil obtained in the hot rolling finish rolling process is separated into N single-layer hot-rolled coils by a coil separator. Wherein, the N single-layer hot-rolled coils correspond to N foregoing transfer bars respectively, that is, each transfer bar is converted into a corresponding single-layer hot-rolled coil.

In one embodiment, the N transfer bars have a same thickness, and correspondingly, the N single-layer hot-rolled coils have a same sheet thickness, and a sheet thickness of each single-layer hot-rolled coil is one Nth of a thickness of the composite hot-rolled coil. For example, when N takes a value of 2, the coil separation process obtains two single-layer hot-rolled coils and a sheet thickness of each single-layer hot-rolled coil is half a thickness of the composite hot-rolled coil (for example, the thickness of the composite hot-rolled coil is 2.20~2.80mm as described above, and correspondingly, a sheet thickness of the single-layer hot-rolled coil is 1.10~1.40mm).

### [Normalizing Process]

A single-layer hot-rolled coil is normalized in a continuous normalizing furnace, a normalizing temperature is T₃=T₃₀±10°C, and T₃₀=980-20×[Si]-10×[Al].

Wherein, as described above, [Si] and [Al] are 100 times of mass percentages of Si and Al in a continuous casting billet.

In the embodiment, a control of the normalizing temperature can further improve a microstructure, a surface quality and a strip shape of a non-oriented silicon steel product, and improve a performance of the non-oriented silicon steel product, especially a magnetic property.

### [Pickling Process]

After the single-layer hot-rolled coil leaves the continuous normalizing furnace, the single-layer hot-rolled coil undergoes a shot blasting and a pickling to remove a surface oxide scale.

### [Cold Rolling Process]

The single-layer hot-rolled coil after the pickling is cold-rolled on a single-stand cold rolling mill to form a single-layer cold-rolled hard coil.

Wherein, the single-stand cold rolling mill preferably adopts a twenty-roll single-stand cold rolling mill.

Thus, combined with the foregoing, it can be known that the present application only needs one cold rolling, and with a low cold rolling reduction, a non-oriented silicon steel product with a thickness equivalent to or even thinner than an existing conventional technology can be obtained; from another perspective, even with a smaller cold rolling reduction than the existing conventional technology, a non-oriented silicon steel product thinner than the existing conventional technology can be obtained.

For example, in one embodiment, a cold rolling reduction ratio is 74~87%, and a sheet thickness of the single-layer cold-rolled hard coil is 0.15~0.30mm.

### [Annealing Process]

The single-layer cold-rolled hard coil is annealed in a continuous annealing furnace to obtain an annealed steel strip.

During the annealing process, a heating rate is 30~50°C/s, a soaking temperature is 980~1020°C, a cooling rate is 10~15°C/s, a protective atmosphere adopts 20%H₂+80%N₂, a dew point is 10~20°C, and a unit tension is 2~3N/mm².

### [Coating Process]

An insulating coating with a thickness of 0.5~0.8µm is coated on each surface of the annealed steel strip, and thus, the non-oriented silicon steel product is obtained.

It can be understood that an actual thickness of the obtained non-oriented silicon steel product is a sum of a sheet thickness of a corresponding single-layer cold-rolled hard coil and thicknesses of an upper surface insulating coating and a lower surface insulating coating of a corresponding annealed steel strip. For example, for a single-layer cold-rolled hard coil with a thickness of 0.15mm, when thicknesses of an upper surface insulating coating and a lower surface insulating coating of an annealed steel strip corresponding to the single-layer cold-rolled hard coil are both 0.5µm, then a corresponding actual thickness of the non-oriented silicon steel product is 0.15mm+0.5µm+0.5µm=0.1510mm. However, since a thickness of a coating is very small relative to a sheet thickness of the single-layer cold-rolled hard coil, a thickness of the non-oriented silicon steel product is basically consistent with the sheet thickness of the single-layer cold-rolled hard coil. Therefore, in the present application, the thickness of the non-oriented silicon steel product takes a value of the sheet thickness of the single-layer cold-rolled hard coil.

The producing method of the present embodiment has been described in detail above. Next, the present embodiment also provides a non-oriented silicon steel thin sheet, which is produced by the producing method. Even when a same chemical composition and a same thickness as an existing conventional technology are adopted, magnetic properties thereof are greatly improved compared with the existing conventional technology, and a production difficulty is low and a production cost is low.

The non-oriented silicon steel thin sheet has a thickness of 0.15~0.30mm, a core loss P_{1.5/50}≤2.50W/kg, P_{1.0/400}≤16.0W/kg, and a magnetic induction B₅₀₀₀≥1.65T.

In terms of a chemical composition, a chemical composition of the non-oriented silicon steel thin sheet in mass percentage is: C≤0.0025%, S≤0.0015%, Si:2.50~3.40%, Al:0.30~1.00%, Mn:0.20~0.80%, P:0.02~0.04%, Nb≤0.004%, V≤0.004%, Ti≤0.004%, Ni≤0.03%, Cr≤0.03%, Cu≤0.03%, N≤0.002%, and a rest being Fe and unavoidable inclusions. Based on the chemical composition, the non-oriented silicon steel thin sheet is a high-grade non-oriented silicon steel with an excellent magnetic property.

It can be understood that a chemical composition of the non-oriented silicon steel thin sheet is the same as a chemical composition of a continuous casting billet from which the non-oriented silicon steel thin sheet is produced by the producing method.

Three specific examples based on the present embodiment are provided below. Specifically, implementation processes of these examples are as follows:
(1) a molten steel was cast into a continuous casting billet with a thickness of 220mm through a slab continuous casting machine;
(2) after the continuous casting billet left the slab continuous casting machine, the continuous casting billet was heated in a heating furnace, and a soaking temperature and a time in furnace are shown in Table 9;
(3) after the continuous casting billet left the heating furnace, a transfer bar with a thickness of 110mm was formed by a multi-pass rough rolling, a reduction ratio of each pass of the rough rolling was 20~22%, and an exit temperature of a final pass of the rough rolling is shown in Table 9;
(4) after cooling the transfer bar to a room temperature, an oxide scale on a surface of the transfer bar was mechanically ground and cleaned, and after a cleaning, a casting billet surface roughness Ra was 0.8~1.2µm. Thereafter, a surface of the transfer bar was coated with an MgO high-temperature resistant insulating coating, then two transfer bars were arranged into a laminated billet, and then four side edges of the laminated billet were welded so that the laminated billet formed an integral composite billet;
(5) the composite billet was heated in a heating furnace, and a heating temperature and a heating time are shown in Table 9;

**[Table 9]**

| Example | Soaking Temperature, °C | Time in Furnace, min | Exit Temperature, °C | Heating Temperature, °C | Heating Time, min |
|---|---|---|---|---|---|
| 7 | 1010 | 180 | 920 | 1110 | 190 |
| 8 | 992 | 190 | 892 | 1106 | 195 |
| 9 | 1005 | 190 | 995 | 1106 | 188 |

(6) after the composite billet exited the heating furnace, the composite billet was hot-rolled to form a composite hot-rolled sheet, and then the composite hot-rolled sheet was coiled into a composite hot-rolled coil, and a thickness H1, a finish rolling temperature and a coiling temperature of the composite hot-rolled sheet are shown in Table 10 respectively;
(7) the composite hot-rolled coil obtained in the hot rolling finish rolling process was separated into two single-layer hot-rolled coils by a coil separator;
(8) a single-layer hot-rolled coil was normalized in a continuous normalizing furnace, and a normalizing temperature is shown in Table 10; after the single-layer hot-rolled coil left the continuous normalizing furnace, the single-layer hot-rolled coil underwent a shot blasting and a pickling to remove a surface oxide scale;
(9) the single-layer hot-rolled coil after the pickling was cold-rolled on a single-stand cold rolling mill to form a single-layer cold-rolled hard coil, and a thickness H3 of the single-layer cold-rolled hard coil is shown in Table 10;
(10) the single-layer cold-rolled hard coil was annealed in a continuous annealing furnace to obtain an annealed steel strip; during the annealing process, a heating rate and a soaking temperature are shown in Table 10, a cooling rate was 10°C/s, a protective atmosphere adopted 20%H₂+80%N₂, a dew point was 15°C, and a unit tension is shown in Table 10;

**[Table 10]**

| Example | H1, mm | Finish Rolling Temperature, °C | Coiling Temperature, °C | Normalizing Temperature, °C | H3, mm | Heating Rate, °C/s | Soaking Temperature, °C | Unit Tension, N/mm² |
|---|---|---|---|---|---|---|---|---|
| 7 | 2.80 | 845 | 620 | 927 | 0.30 | 35 | 980 | 2.9 |
| 8 | 2.60 | 840 | 620 | 909 | 0.20 | 38 | 985 | 2.5 |
| 9 | 2.40 | 838 | 622 | 920 | 0.15 | 40 | 1000 | 2.2 |

(11) an insulating coating shown in Table 12 was coated on each surface of the annealed steel strip, and thus, a non-oriented silicon steel product was obtained;
a chemical composition of one non-oriented silicon steel product obtained in various examples is shown in Table 11, and except for elements shown in Table 11, other chemical compositions are Fe and unavoidable inclusions; furthermore, a thickness, a core loss and a magnetic induction of the non-oriented silicon steel product are shown in Table 12;

**[Table 11]**

| Exam ple | chemical composition by mass percentage, % | | | | | | | | | | | | |
|---|---|---|---|---|---|---|---|---|---|---|---|---|---|
| | C | S | Si | Al | M n | P | Nb | V | Ti | Ni | Cr | Cu | N |
| 7 | 0.00 19 | 0.00 11 | 2.5 0 | 0.3 0 | 0.2 0 | 0.0 2 | 0.00 11 | 0.00 10 | 0.00 14 | 0.0 07 | 0.0 03 | 0.0 05 | 0.00 11 |
| 8 | 0.00 17 | 0.00 12 | 3.4 0 | 0.3 0 | 0.2 0 | 0.0 3 | 0.00 09 | 0.00 12 | 0.00 07 | 0.0 06 | 0.0 04 | 0.0 15 | 0.00 17 |
| 9 | 0.00 12 | 0.00 09 | 2.5 0 | 1.0 | 0.5 0 | 0.0 2 | 0.00 07 | 0.00 17 | 0.00 05 | 0.0 13 | 0.0 09 | 0.0 11 | 0.00 11 |

**[Table 12]**

| Example | Coating Thickness, µm | Thickness, mm | P_{1.5/50}, W/kg | P_{1.0/400}, W/kg, | B₅₀₀₀, T |
|---|---|---|---|---|---|
| 7 | 0.8 | 0.30 | 2.37 | 13.79 | 1.687 |
| 8 | 0.7 | 0.20 | 1.84 | 10.48 | 1.661 |
| 9 | 0.8 | 0.15 | 1.96 | 10.38 | 1.675 |

### <Fourth Embodiment>

This embodiment provides a producing method of a non-oriented silicon steel thin sheet.

In the present embodiment, the producing method comprises sequentially performed processes of a continuous casting process, a slab heating process, a transfer bar preparation process, a surface treatment process, a billet assembly process, a heating process, a hot rolling process, a coil separation process, a pickling process, a cold rolling process, an annealing process and a coating process, thereby producing a non-oriented silicon steel product.

A difference between the present embodiment and the third embodiment introduced above lies in: a surface treatment process and an omitting of a normalizing process. And a slab continuous casting process, a slab heating process, a transfer bar preparation process, a billet assembly process, a heating process, a hot rolling finish rolling process, a pickling process, a cold rolling process, a coil separation process, an annealing process and a coating process of the present embodiment are respectively the same as the third embodiment introduced above. Differences between the present embodiment and the third embodiment will be introduced below.

### [Transfer Bar Surface Treatment Process]

In the present embodiment, a transfer bar obtained in a transfer bar preparation process enters a tunnel furnace for a high-temperature reduction heat treatment in a reducing atmosphere of 90%H₂+10%H₂S, a holding temperature is 950~1000°C, and a holding time is 15~30min. Thus, the surface treatment process of the present embodiment can not only achieve a treatment of a surface oxide scale, thereby benefiting a surface quality of a subsequently obtained non-oriented silicon steel product; but also, compared with a mechanical grinding method adopted in a surface treatment process in the third embodiment above, the transfer bar in the present embodiment maintains a high temperature (for example, a holding temperature of 950~1000°C) in the surface treatment process without requiring the transfer bar to be reduced to a normal temperature. On one hand, a generation of a surface crack is avoided, and a surface quality of the non-oriented silicon steel product is further improved. On another hand, a microstructure of the transfer bar can be improved at the high temperature, which is beneficial to further improving magnetic properties of a final non-oriented silicon steel, and even an excellent magnetic property can be obtained by omitting a normalizing process, thereby shortening a process flow and reducing a production cost. On another hand, treating the surface oxide scale with a hydrogen atmosphere can improve a yield, further reducing the production cost.

Here, it is supplementarily explained that the present embodiment omits the normalizing process, and correspondingly, in the pickling process, a single-layer hot-rolled coil obtained in the coil separation process is directly subjected to a shot blasting and a pickling to remove the surface oxide scale.

Furthermore, a non-oriented silicon steel thin sheet provided by the present embodiment is produced by the producing method. Even when a same chemical composition and a same thickness as an existing conventional technology are adopted, magnetic properties thereof are greatly improved compared with the existing conventional technology, and a production difficulty is low and a production cost is low.

The non-oriented silicon steel thin sheet has a thickness of 0.15~0.30mm, a core loss P_{1.5/50}≤2.30W/kg, P_{1.0/400}≤13.0W/kg, and a magnetic induction B₅₀₀₀≥1.64T.

In terms of a chemical composition, a chemical composition of the non-oriented silicon steel thin sheet in mass percentage is: C≤0.0025%, S≤0.0015%, Si:2.50~3.40%, Al:0.30~1.00%, Mn:0.20~0.80%, P:0.02~0.04%, Nb≤0.004%, V≤0.004%, Ti≤0.004%, Ni≤0.03%, Cr≤0.03%, Cu≤0.03%, N≤0.002%, and a rest being Fe and unavoidable inclusions. Based on the chemical composition, the non-oriented silicon steel thin sheet is a high-grade non-oriented silicon steel with an excellent magnetic property.

Three specific examples based on the present embodiment are provided below. Specifically, implementation processes of these examples are as follows:
(1) a molten steel was cast into a continuous casting billet with a thickness of 250mm through a slab continuous casting machine;
(2) after the continuous casting billet left the slab continuous casting machine, the continuous casting billet was heated in a heating furnace, and a soaking temperature and a time in furnace are shown in Table 13;
(3) after the continuous casting billet left the heating furnace, a transfer bar with a thickness of 125mm was formed by a multi-pass rough rolling, a reduction ratio of each pass of the rough rolling was 20~22%, and an exit temperature of a final pass of the rough rolling is shown in Table 13;
(4) the transfer bar entered a tunnel furnace for a high-temperature reduction heat treatment in a reducing atmosphere of 90%H₂+10%H₂S, and a holding temperature and a holding time are shown in Table 13; thereafter, a surface of the transfer bar was coated with an MgO high-temperature resistant insulating coating, then two transfer bars were arranged into a laminated billet, and then four side edges of the laminated billet were welded so that the laminated billet formed an integral composite billet;
(5) the composite billet was heated in a heating furnace, and a heating temperature and a heating time are shown in Table 13;

**[Table 13]**

| Example | Soaking Temperature, °C | Time in Furnace, min | Exit Temperature, °C | Holding Temperature, °C | Holding Time, min | Heating Temperature, °C | Heating Time, min |
|---|---|---|---|---|---|---|---|
| 10 | 1020 | 180 | 910 | 1000 | 18 | 1120 | 180 |
| 11 | 990 | 200 | 890 | 980 | 20 | 1110 | 190 |
| 12 | 1005 | 190 | 900 | 950 | 30 | 1100 | 200 |

(6) after the composite billet exited the heating furnace, the composite billet was hot-rolled to form a composite hot-rolled sheet, and then the composite hot-rolled sheet was coiled into a composite hot-rolled coil, and a thickness H1, a finish rolling temperature and a coiling temperature of the composite hot-rolled sheet are shown in Table 14 respectively;
(7) the composite hot-rolled coil obtained in the hot rolling finish rolling process was separated into two single-layer hot-rolled coils by a coil separator;
(8) a single-layer hot-rolled coil was directly subjected to a shot blasting and a pickling without a normalizing to remove a surface oxide scale;
(9) the single-layer hot-rolled coil after the pickling was cold-rolled on a single-stand cold rolling mill to form a single-layer cold-rolled hard coil, and a thickness H3 of the single-layer cold-rolled hard coil is shown in Table 14;
(10) the single-layer cold-rolled hard coil was annealed in a continuous annealing furnace to obtain an annealed steel strip; during the annealing process, a heating rate and a soaking temperature are shown in Table 14, a cooling rate was 10°C/s, a protective atmosphere adopted 20%H₂+80%N₂, a dew point was 15°C, and a unit tension is shown in Table 14;

**[Table 14]**

| Example | H1, mm | Finish Rolling Temperature, °C | Coiling Temperature, °C | H3, mm | Heating Rate, °C/s | Soaking Temperature, °C | Unit Tension, N/mm² |
|---|---|---|---|---|---|---|---|
| 10 | 2.80 | 860 | 640 | 0.30 | 35 | 980 | 2.9 |
| 11 | 2.60 | 850 | 620 | 0.20 | 38 | 985 | 2.5 |
| 12 | 2.40 | 840 | 600 | 0.15 | 40 | 1000 | 2.2 |

(11) an insulating coating shown in Table 16 was coated on each surface of the annealed steel strip, and thus, a non-oriented silicon steel product was obtained;
a chemical composition of one non-oriented silicon steel product obtained in various examples is shown in Table 15, and except for elements shown in Table 15, other chemical compositions are Fe and unavoidable inclusions; furthermore, a thickness, a core loss and a magnetic induction of the non-oriented silicon steel product are shown in Table 16.

**[Table 15]**

| Exam ple | chemical composition by mass percentage, % | | | | | | | | | | | | |
|---|---|---|---|---|---|---|---|---|---|---|---|---|---|
| | C | S | Si | Al | M n | P | Nb | V | Ti | Ni | Cr | Cu | N |
| 10 | 0.00 21 | 0.00 12 | 2.5 0 | 0.3 0 | 0.2 0 | 0.0 16 | 0.00 10 | 0.00 12 | 0.00 11 | 0.0 08 | 0.0 01 | 0.0 09 | 0.00 11 |
| 11 | 0.00 14 | 0.00 07 | 3.4 0 | 0.3 0 | 0.2 0 | 0.0 19 | 0.00 05 | 0.00 11 | 0.00 08 | 0.0 16 | 0.0 06 | 0.0 12 | 0.00 17 |
| 12 | 0.00 19 | 0.00 04 | 2.5 0 | 1.0 | 0.5 0 | 0.0 17 | 0.00 07 | 0.00 13 | 0.00 06 | 0.0 11 | 0.0 09 | 0.0 10 | 0.00 11 |

**[Table 16]**

| Example | Coating Thickness, µm | Thickness, mm | P_{1.5/50}, W/kg | P_{1.0/400}, W/kg, | B₅₀₀₀, T |
|---|---|---|---|---|---|
| 10 | 0.5 | 0.30 | 2.26 | 12.18 | 1.667 |
| 11 | 0.5 | 0.20 | 2.09 | 11.64 | 1.652 |
| 12 | 0.6 | 0.15 | 1.96 | 10.63 | 1.641 |

## Claims

1. A producing method of a non-oriented silicon steel thin sheet, wherein the method comprises the following processes,
a continuous casting process: producing a continuous casting billet by a slab continuous casting machine, a thickness of the continuous casting billet being t₁=200~250mm, a chemical composition thereof in mass percentage being: C≤0.0025%, S≤0.0015%, Si:2.50~3.40%, Al:0.30~1.00%, Mn:0.20~0.80%, P:0.02~0.04%, Nb≤0.004%, V≤0.004%, Ti≤0.004%, Ni≤0.03%, Cr≤0.03%, Cu≤0.03%, N≤0.002%, and a rest being Fe and unavoidable inclusions;
a slab heating process: after the continuous casting billet leaves the slab continuous casting machine, heating the continuous casting billet in a heating furnace, a soaking temperature being T₁=T₁₀±10°C, a time in furnace being 180~200min, T₁₀=1100-30×[Si]-20×[Al], wherein [Si] and [Al] are 100 times of mass percentages of Si and Al in the continuous casting billet;
a transfer bar preparation process: after the continuous casting billet leaves the heating furnace, forming a transfer bar by a multi-pass rough rolling, a thickness of the transfer bar being t₂=t₁/N, wherein, N=2~6;
a surface treatment process: the transfer bar enters a tunnel furnace for a high-temperature reduction heat treatment in a reducing atmosphere of 90%H₂+10%H₂S, a holding temperature being 950~1000°C, a holding time being 15~30min;
a billet assembly process: arranging N transfer bars into a laminated billet, welding four side edges of the laminated billet, so that the laminated billet forms an integral composite billet;
a heating process: heating the composite billet in the heating furnace, a heating temperature being 1090~1130°C, a heating time being 180~200min;
a hot rolling finish rolling process: after the composite billet exits the heating furnace, performing a hot rolling, to form a composite hot-rolled coil with a thickness of 2.20~2.80mm; wherein, a finish rolling temperature of the hot rolling is 820~860°C, a coiling temperature is 600~640°C;
thereafter, the obtained composite hot-rolled coil is produced into a single-layer non-oriented silicon steel product with a thickness of 0.15~0.30mm through a sequential pickling process, a cold rolling process, an annealing process and a coating process, and through a coil separation process located before or after the cold rolling process, without a normalizing.

2. The producing method of a non-oriented silicon steel thin sheet according to claim 1, wherein a reduction ratio of each pass of the rough rolling is 20~22%, and an exit temperature T₂ of a final pass of the rough rolling is 900±25°C.

3. The producing method of a non-oriented silicon steel thin sheet according to claim 1, wherein the composite billet is a cubic billet with a parallel upper surface and a lower surface and planar side edges;
welding the four side edges of the laminated billet by an arc welding.

4. The producing method of a non-oriented silicon steel thin sheet according to claim 1, wherein in the billet assembly process, applying a high-temperature resistant insulating coating to an upper surface and a lower surface of the transfer bar by an electrostatic spraying, and then arranging the N transfer bars into the laminated billet, wherein the high-temperature resistant insulating coating adopts an MgO high-temperature resistant coating.

5. The producing method of a non-oriented silicon steel thin sheet according to claim 1, wherein the coil separation process is located before the pickling process, the composite hot-rolled coil is separated into N single-layer hot-rolled coils by a coil separator, and thereafter each single-layer hot-rolled coil is produced into the single-layer non-oriented silicon steel product through the sequential pickling process, the cold rolling process, the annealing process and the coating process.

6. The producing method of a non-oriented silicon steel thin sheet according to claim 5, wherein in the cold rolling process, each single-layer hot-rolled coil is cold-rolled on a single-stand cold rolling mill to form a single-layer cold-rolled hard coil, a cold rolling reduction ratio is 74~87%, and a sheet thickness of the single-layer cold-rolled hard coil is 0.15~0.30mm.

7. The producing method of a non-oriented silicon steel thin sheet according to claim 1, wherein the coil separation process is located between the cold rolling process and the annealing process, the composite hot-rolled coil is first made into a composite cold-rolled hard coil through the sequential pickling process and the cold rolling process, thereafter the composite cold-rolled hard coil is separated into N single-layer cold-rolled hard coils by a coil separator, and each single-layer cold-rolled hard coil is produced into the single-layer non-oriented silicon steel product through the sequential annealing process and the coating process.

8. The producing method of a non-oriented silicon steel thin sheet according to claim 7, wherein in the cold rolling process, the composite hot-rolled coil is cold-rolled on a single-stand cold rolling mill to form the composite cold-rolled hard coil, a cold rolling reduction ratio is 73~86%, a thickness of the composite cold-rolled hard coil is 0.30~0.60mm, and a sheet thickness of a single-layer cold-rolled hard coil is 0.15~0.30mm.

9. The producing method of a non-oriented silicon steel thin sheet according to claim 6 or 7, wherein in the annealing process: a single-layer cold-rolled hard coil is annealed in a continuous annealing furnace to obtain an annealed steel strip;
during the annealing process, a heating rate is 30~50°C/s, a soaking temperature is 980~1020°C, a cooling rate is 10~15°C/s, a protective atmosphere adopts 20%H₂+80%N₂, a dew point is 10~20°C, and a unit tension is 2~3N/mm².

10. The producing method of a non-oriented silicon steel thin sheet according to claim 1, wherein in the coating process: coating an insulating coating with a thickness of 0.5~0.8µm on each surface of an annealed steel strip.
